# EUROPÄISCHE PATENTSCHRIFT

(11) **EP 1 670 111 B1**
(45) Veröffentlichungstag und Bekanntmachung des Hinweises auf die Patenterteilung: **14.10.2009**
(21) Anmeldenummer: 05026663.4
(22) Anmeldetag: 07.12.2005
(51) Int. Cl.: H02G 3/04, F16L 9/19

(54) **Rohrverband**
Bundle of tubes
Faisceau de tubes

(30) Priorität: 10.12.2004 DE 102004059593
(43) Veröffentlichungstag der Anmeldung: 14.06.2006
(73) Patentinhaber: gabo Systemtechnik GmbH, 94559 Niederwinkling (DE)
(72) Erfinder: Bauer, Peter, 94357 Konzell (DE); Karl, Markus, 94327 Bogen (DE); Lederer, Roland, 94374 Schwarzach (DE)

(56) Entgegenhaltungen:
- EP-A- 0 708 287
- EP-A- 1 330 001
- NL-A- 6 808 668
- US-A1- 2002 000 029

## Beschreibung

Die Erfindung betrifft einen Rohrverband zur Aufnahme von Kabeln, bestehend aus mindestens drei Kabel führenden Innenrohren, die in einer Umhüllung enthalten sind.

Solche Rohrverbände sind an sich bekannt. Dabei werden, wie in der EP 0 984 539 A1 dargestellt, zwei oder drei parallel nebeneinander in einer Flachlage angeordnete, von einer Kunststofffolie umhüllte und zusammengehaltene Kabelführungsrohre zu einem Rohrverbund vereint. Hierbei sind, wegen der Umhüllung mit einer Folie, keine stabilen bzw. feste Rohrverbände möglich. Auch können nur eine begrenzte Anzahl Kabelführungsrohre durch eine Folie umhüllt werden. Gleiches gilt für die DE GM 298 21 948 U1 und DE-GM 298 24 449 U1, wobei im Unterschied zu der EP 0 984 539 A1 auf einige in dieser enthaltenen Varianten, wie z.B. ein gewisses Spiel zwischen den einzelnen Rohren Bezug genommen wird. Ein ähnlicher Rohrverbund geht aus der DE 197 22 746 A1 und dem DE-GM 297 24 702 U1 sowie der EP 0 939 262 A2 hervor. Ein weiterer flexibler geschlossener Rohrverbund mit einer Anzahl parallel zueinander verlaufenden, gebündelten und durch Verbindungsmittel, d.h. flexible Bänder, zusammengehaltenen Kunststoffrohren zeigt die DE 36 06 767 C1, wobei die Rohre durch die Bänder in definiertem Abstand zueinander gehalten werden. Die DE 36 25 127 C1 und die EP 0 253 953 B1 zeigen ebenfalls einen ähnlichen, mittels Bändern zusammengehaltenen Rohrverband. Die EP 0 235 576 A2 offenbart einen weiteren Rohverband, bei dem der Zusammenhalt durch annähernd tangential an den Rohren angelenkter Bänder geschieht. Eine Zusammenfassung mehrerer el.

Leitungen zu einem Bündel mittels Ringen oder eine Hülle, um diese Leitungen um eine Mauerecke oder dergl. zusammengefasst herum legen zu können, zeigt die DE-OS 25 09 599. Schließlich wird mit der UK 1205 007 eine Art Rohrverbund vorgeschlagen, bei dem einzelne Rohre einzeln relativ lose in einem extrudierten Schutzprofil für die Aufnahme von vier Einzelrohren eingebracht sind. Die EP 1 330 001 A1 zeigt eine Rohrmatte, bei der die kabelführenden Rohre untereinander durch Verbindungsstege verbunden sind.

Sämtliche Dokumente offenbaren Umhüllungen für Kabelführungsrohre, bzw. Kabel, aus flexiblen Folien, vorzugsweise Schrumpffolien. Solche Umhüllengen können jedoch nur wenige Kabelschutzrohre umfangen, besitzen keine erforderliche Festigkeit und sind leicht verletzbar. Diese Rohrverbünde sind auch weder gas- noch wasserdruckresistent. Für Erdverlegungen sind solcherart erzeugte Rohrverbunde ebenfalls nicht besonders geeignet. Eine größere Anzahl Kabelschutzrohre kann darin auch nicht untergebracht werden, ebenso wenig können zusätzliche Kabelführungs- oder dergl. Rohre nachträglich in eine Folienumhüllung eingefügt werden.

Der Erfindung, wie sie in den Ansprüchen beschrieben ist, liegt demgegenüber die Aufgabe zugrunde, einen gas- und wasserdruck-resistenten Rohrverband zu besitzen, der einerseits die Nachteile der bekannten Anordnungen dieser Art vermeidet und in dem eine größere Anzahl flexibler Innenrohre Platz findet, wobei ein Hüllrohr Verwendung finden soll, dass einen Außenumfang aufweist, der dem genormter Rohre entspricht und handelsübliche Abdicht- und sonstige -elemente dafür eingesetzt werden können.

Die mit dem Gegenstand der Erfindung erzielten Vorteile liegen insbesondere darin, eine größere Anzahl beispielsweise kabelführender Innenrohre so von einem Hüllrohr hinreichender Festigkeit zusammengehalten werden, dass diese in einem Arbeitsschritt in ein bereits vorhandenes Rohr, einen Hohlraum oder auch direkt in die Erde verlegt werden können, wobei das Hüllrohr derart flexibel ausgebildet ist, dass es sich einem verfügbaren freien Querschnitt anpasst, dabei eine ausreichende Festigkeit besitz und dabei gas- und wasserdruckresistent ist. Ein weiterer Vorteil liegt darin, dass das Hüllrohr einen Außenumfang aufweist, der dem genormter Rohre entspricht und dafür handelsübliche Abdichtelemente Verwendung finden können, um am Austritt der Innenrohre aus dem Hüllrohr den verbleibenden Querschnitt zwischen den Innenrohren und dem Hüllrohr gas- und wasserdicht zu verschließen, wobei die Innenrohre dafür geeignet sind, dass Kabel mittels Druckluft von 10 bar oder mehr Kabel eingeblasen werden können. Ein solches stabiles Hüllrohr kann auch mehrere Innenrohre aufnehmen, selbst nachträglich können noch Innenrohre, selbstverständlich nur bis zu einer Obergrenze, die durch den Durchmesser des Hüllrohres vorgegeben ist, in das Hüllrohr eingezogen werden.

Die Erfindung ist nachstehend anhand eines in den Abbildungen dargestellten Ausführungsbeispieles näher erläutert.

Es zeigt:
- Fig. 1: einen Schnitt durch einen Rohverband,
- Fig. 2: eine Ausführungsvariante der Fig. 1,
- Fig. 3: eine weitere Ausführungsvariante und
- Fig. 4: eine perspektivische Darstellung eines Rohrverbandes

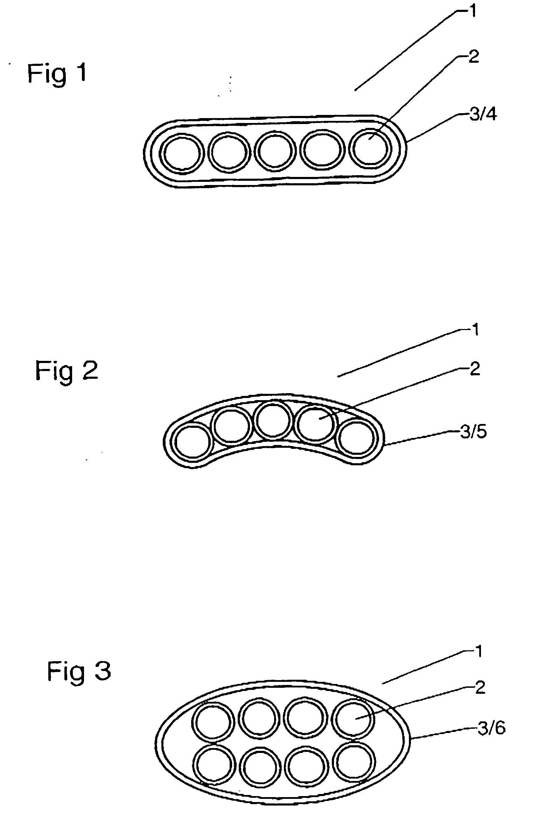

Der in den Abbildungen dargestellte Rohrverband 1 besteht im wesentlichen aus mehreren Rohren, beispielsweise Kabelschutzrohren 2, die lose in einem flexiblen Hüllrohr 3 vorgesehen sind. Das Hüllrohr 3 kann beispielsweise flach 3/4 ausgebildet sein, wie in Fig. 1 dargestellt, oder bogenförmig, wie in Fig. 2 dargestellt, wobei die flache Form der Fig. 1 in die bogenförmige gem.
Fig. 2 umgeformt werden kann.

Die Fig. 3 dagegen zeigt eine ovale Form des Hüllrohres 3, die, dem größeren Volumen entsprechend, mehrere Innenrohre 2 aufnehmen kann, wobei auch dieses Rohr bis zu einem zylindrischen Querschnitt umformbar ist.

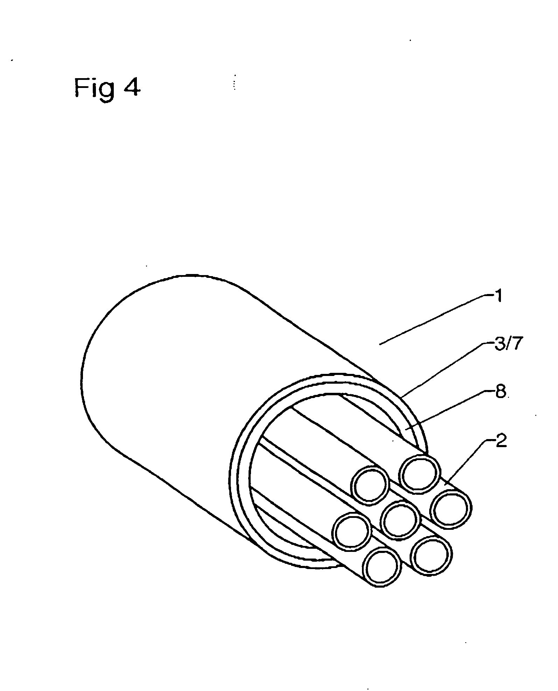

Fig. 4 zeig das zylindrisch umgeformte Hüllrohr 3/7, an dessen Ende mittels einer Stützhülse 8 ringförmig ausgebildet ist, die das umgeformte Ende des Hüllrohres 3/7 stützt und somit die runde Form des Hüllrohrendes gewährleistet, sodass handelsübliche Abdichtelemente etc. angeschlossen werden können.

Das Hüllrohr 3, sowie die Innenrohre 2 sind vorteilhafterweise aus Kunststoffen gefertigt, sodass eine Verlegung in ein bereits vorhandenes Rohr, einen Hohlraum, oder auch direkt ins Erdreich möglich ist.

Die Anordnung ist gas- und wasserdicht und weist eine ausreichende Festigkeit gegen anstehenden Gas- und Wasserdruck auf. Die Innenrohre sind so ausgebildet, dass beispielsweise el. Kabel, Glasfaserkabel oder dergl. mittels Druckluft von 10 bar oder noch mehr, eingeblasen werden können.

### Bezugszeichenliste

- 1: Rohrverband
- 2: Innenrohr
- 3: Hüll-Rohr
- 4: Hüll-Rohr in flacher Form
- 5: Hüll-Rohr bogenförmig
- 6: Hüll-Rohr-oval
- 7: Hüll-Rohr mit kreisrundem Querschnitt bis Austritt der Innenrohre
- 8: Stützhülse zur Formung des runden Hüll-Rohres

## Patentansprüche

1. Rohrverband zur Aufnahme von Kabeln, bestehend aus mindestens drei Innenrohren zur Führung von Kabeln, die in einer Umhüllung aus Kunststoff enthalten sind, **dadurch gekennzeichnet, dass** ein flexibles Hüllrohr (3) vorgesehen ist, das einen Außenumfang aufweist, der dem genormter, kreisrunder Rohre entspricht, gas und wasserdicht ausgebildet ist und mindestens eine Innendruckfestigkeit von 0,5 bar aufweist und das Hüllrohr (3) während der Montage und des Transportes eine flache bis ovale Form (4) /(6) aufweist und am Austritt der Innenrohre (2) das beidseitige Ende des Hüllrohres (3) zu einem kreisrunden Querschnitt (7) verformbar ist, wobei die kabelführenden Innenrohre (2) darin lose oder aneinander liegend enthalten sind.

2. Rohrverband nach Anspruch 1 **dadurch gekennzeichnet, dass** die Innenrohre (2) im Hüllrohr (3) in mindestens einer Lage angeordnet und darin frei beweglich sind.

3. Rohrverband nach Anspruch 1 und 2, **dadurch gekennzeichnet, dass** der Außenumfang des Hüllrohres (3) dem genormter, kreisrunder Rohre mit einem Durchmesser von je 25, 32, 40, 50 oder 63 mm entspricht.

4. Rohrverband nach Anspruch 1 bis 3 **dadurch gekennzeichnet, dass** die Wanddicke des Hüllrohres (3) mindestens 0,4 mm beträgt.

5. Rohrverband nach Anspruch 1 und einen der folgenden, **dadurch gekennzeichnet, dass** eine Stützhülse (8) Innen am Ende des Hüllrohres (3) eingesetzt ist.

6. Rohrverband nach Anspruch 1 und einen der folgenden, **dadurch gekennzeichnet, dass** die Innenrohre eine Festigkeit (2) zum Einblasen von Kabeln mit einem Druck von mindestens 10 bar besitzen.

7. Rohrverband nach Anspruch 1 und einen der folgenden **dadurch gekennzeichnet, dass** das Ende des Hüllrohres mit kreisrundem Querschnitt (7) am Austritt der Innenrohre (2) gasdicht bis zu einem Druck von mindestens 0,5 bar verschließbar ist.

## Claims

1. Compound tube for housing cables, comprising at least three inner tubes for routing cables that are enclosed in a plastic sheath, **characterised in that** a flexible cladding tube (3) is provided, with an external circumference corresponding to the external circumference of standardised, circular tubes, in a gas-tight and waterproof design, and with an internal compressive strength of at least 0.5 bar, wherein the cladding tube (3) has a flat to oval form (4) / (6) during assembly and transport and both ends of the cladding tube (3) can be deformed at the exit point of the inner tubes (2) to a circular cross-section (7), and wherein the inner tubes containing the cables (2) sit loosely inside or lie alongside one another.

2. Compound tube according to claim 1, **characterised in that** the inner tubes (2) in the cladding tube (3) are arranged in at least one layer and can move around freely within the cladding tube (3).

3. Compound tube according to claims 1 and 2, **characterised in that** the external circumference of the cladding tube (3) corresponds to the external circumference of standardised, circular tubes with diameters of 25, 32, 40, 50 or 63 mm respectively.

4. Compound tube according to claims 1 to 3, **characterised in that** the wall thickness of the cladding tube (3) is at least 0.4 mm.

5. Compound tube according to claim 1 and any one of the subsequent claims, **characterised in that** a support sleeve (8) is inserted inside at the end of the cladding tube (3).

6. Compound tube according to claim 1 and any one of the subsequent claims, **characterised in that** the inner tubes exhibit sufficient strength (2) to receive cables injected at a pressure of at least 10 bar.

7. Compound tube according to claim 1 and any one of the subsequent claims, **characterised in that** the end of the cladding tube with a circular cross-section (7) can be sealed gas-tight up to a pressure of at least 0.5 bar at the exit of the inner tubes (2).

## Revendications

1. Faisceau pour le logement de câbles, constitué d'au moins trois tubes intérieurs servant au guidage de câbles et contenus dans une enveloppe en matériau synthétique, **caractérisé en ce qu'**un tube enveloppe souple (3) est prévu, dont le pourtour extérieur correspond à celui du tube rond normalisé qui est hermétique aux gaz et à l'eau et qui présente au moins une résistance de 0,5 bar à la pression intérieure, et que la forme du tube enveloppe (3) pendant le montage et le transport est plate à ovale (4) / (6) et qu'à la sortie des tubes intérieurs (2) une déformation des deux extrémités du tube enveloppe (3) est possible de manière à obtenir une section transversale circulaire (7), les tubes intérieurs (2) servant au guidage des câbles et qui y sont contenus étant libres ou en contact les uns avec les autres.

2. Faisceau conformément à la revendication 1, **caractérisé en ce que** les tubes intérieurs (2) dans le tube enveloppe (3) sont disposés sur au moins un niveau et restent libres dans ledit tube.

3. Faisceau conformément à la revendication 1 et 2, **caractérisé en ce que** le pourtour extérieur du tube enveloppe (3) correspond à celui du tube rond normalisé de diamètre de 25, 32, 40, 50 ou 63 mm.

4. Faisceau conformément à la revendication 1 à 3, **caractérisé en ce que** l'épaisseur de paroi du tube enveloppe (3) est au moins égale à 0,4 mm.

5. Faisceau conformément à la revendication 1 et l'une des suivantes, **caractérisé en ce qu'**une douille d'appui (8) est mise en place à l'intérieur à l'extrémité du tube enveloppe (3).

6. Faisceau conformément à la revendication 1 et l'une des suivantes, **caractérisé en ce que** les tubes intérieurs présentent une résistance (2) permettant le soufflage de câbles à une pression d'au moins 10 bars.

7. Faisceau conformément à la revendication 1 et l'une des suivantes, **caractérisé en ce que** l'extrémité du tube enveloppe de section transversale circulaire (7) peut, à la sortie des tubes intérieurs (2), être rendue hermétique aux gaz jusqu'à une pression d'au moins 0,5 bar.
